# EUROPEAN PATENT SPECIFICATION

(11) **EP 3 413 595 B1**
(45) Date of publication and mention of the grant of the patent: **12.02.2020**
(21) Application number: 16891964.5
(22) Date of filing: 01.03.2016
(51) Int. Cl.: H04W 4/02, H04W 24/02, H04W 52/02

(54) **PROCESSING METHOD, DEVICE AND SYSTEM FOR SERVICE OPTIMIZATION**
VERARBEITUNGSVERFAHREN, VORRICHTUNG UND SYSTEM ZUR DIENSTOPTIMIERUNG
DISPOSITIF, SYSTÈME ET PROCÉDÉ DE TRAITEMENT SERVANT À UNE OPTIMISATION DE SERVICE

(43) Date of publication of application: 12.12.2018
(73) Proprietor: Huawei Technologies Co., Ltd., Longgang District Shenzhen, Guangdong 518129 (CN)
(72) Inventor: PANG, Lingli, Shenzhen Guangdong 518129 (CN); LIU, Huiping, Shenzhen Guangdong 518129 (CN); HUANG, Min, Shenzhen Guangdong 518129 (CN); ZHENG, Xiaoxiao, Shenzhen Guangdong 518129 (CN); SHI, Xianwen, Shenzhen Guangdong 518129 (CN)
(74) Representative: Thun, Clemens
(86) International application number: PCT/CN2016/075110
(87) International publication number: WO 2017/147771

(56) References cited:
- CN-A- 1 662 097
- CN-A- 101 562 777
- CN-A- 101 562 777
- GB-A- 2 500 334
- US-A1- 2014 098 757
- US-A1- 2014 269 364
- US-A1- 2015 098 334

## Description

### TECHNICAL FIELD

Embodiments of the present disclosure relate to mobile communications technologies, and in particular, to a service optimization processing method, a device, and a system.

### BACKGROUND

With gradual improvement in living standards, people have an increasing requirement for communication. Users having smart mobile terminals can enjoy various services, and the users also have an increasingly high requirement on service experience.

With constant growth of data services, network service optimization becomes increasingly important to ensure both user experience and network resource usage efficiency. In the prior art, service optimization mainly means improvement in radio resource utilization, for example, controlling resource allocation and signaling of an air interface that is configured to transmit data between user equipment (UE) and an access node of a radio access network (RAN), and reducing power consumption of the UE. The foregoing optimization is performed from a perspective of a network without giving consideration to service application optimization specific to a UE; therefore, user experience is affected. The application optimization specific to the UE is a newly-added function and requires cooperation between a network device and a terminal. There is no related technical solution for a specific executing process yet.

For example, US 2014/0269364 A1 refers to a system and method for managing self-organizing wireless networks by a cloud server. In an aspect, the cloud server is configured to collect from a plurality of radio nodes of the wireless networks statistical and predictive information about accessibility and performance of said nodes; collect from a plurality of mobile devices connected to the wireless networks at least statistical and predictive information about performance, location, mobility and services of said devices; analyze the collected information to assess the performance, loading and distribution of network resource among the radio nodes; determine, based on the analysis, optimization guidelines for performance, loading and distribution of network resources among the radio nodes; and send the optimization guidelines to the radio nodes in order to optimize performance, loading and distribution of network resources at the radio nodes and to make resource optimization decisions specific to the individual mobile devices.

Further, US 2015/0098334 A1 refers to systems and methods for optimization of mobile traffic directed to private networks and operator configurability thereof. One example includes a method, which may be implemented on a system, for identifying a network accessed by mobile traffic at a mobile device, identifying an operator of the network, and/or determining whether the mobile traffic is directed towards a private or public network. In response to determining that the mobile traffic is directed towards a private network, determining whether the private network is owned by or operated by the operator. Optimization of the mobile traffic is performed based on policies set by the operator. In general, the system maintains and/or enforces different sets of policies regarding mobile traffic optimization set by different and multiple operators.

Further, GB 2500334 A refers to a system for optimizing resources in a mobile network having a local proxy on a mobile device to aggregate client-side parameters and a proxy server to aggregate server-side parameters to formulate a policy for traffic control in the mobile network between the mobile device and the server. The proxy server may track network conditions and set polling schedules for the mobile clients accordingly. Polling frequency made to content servers can be reduced when there is congestion. Multiple mobile client polling requests may be aggregated into a single polling request by the proxy server before sending to a content server.

### SUMMARY

Embodiments of the present disclosure provide a service optimization processing method, a device, and a system, so that power consumption of UE can be effectively reduced, and user experience is improved. In addition, network signaling and resource usage can be optimized, and channel resource utilization is improved.

This problem is solved by the subject matter of the independent claims. Further implementation forms are provided in the dependent claims.

According to a first aspect, an embodiment of the present disclosure provides a service optimization processing method. The method is executed by a UE, and the method includes:
obtaining, by the UE, sensor information of the UE; and
sending, by the UE, a first message to a network device, where the first message includes the sensor information of the UE, and the first message is used by the network device to perform service optimization processing based on the sensor information of the UE.

A beneficial effect of the method is as follows: The UE reports the sensor information of the UE to the network device, and the network device then performs optimization processing on a service of the UE or adjusts a related service based on the sensor information reported by the UE, so that power consumption of the UE can be optimized.

Optionally, the UE may obtain at least one of the following information as the sensor information of the UE: sensor type information of the UE, sensor precision information of the UE, and sensor value information of the UE.

Further, optionally, the sensor value information of the UE that is obtained by the UE may include at least one of a movement speed of the UE, a movement direction of the UE, and location information of the UE.

In a possible implementation of the first aspect, after sending the first message to the network device, the UE may further receive a second message from the network device, where the second message includes service optimization indication information that is generated by the network device based on the sensor information of the UE, and the service optimization indication information is used to indicate a service optimization policy that needs to be executed by the UE or the network device.

In an optional implementation, the service optimization indication information includes channel quality variation information of the UE, and the method further includes: adjusting, by the UE, a service bit rate based on the channel quality variation information of the UE.

In another optional implementation, the service optimization indication information includes a service bit rate recommended by the network device, and the method further includes: adjusting, by the UE, a service bit rate based on the service bit rate recommended by the network device.

In still another optional implementation, the service optimization indication information includes fast scheduling indication information, where the fast scheduling indication information is used to indicate, to the UE, that fast scheduling is to be performed on service data by the network device.

According to a second aspect, an embodiment of the present disclosure provides a service optimization processing method. The method is executed by a network device, and the method includes:
receiving, by the network device, a first message from UE, where the first message includes sensor information of the UE; and
performing, by the network device, service optimization processing based on the sensor information of the UE.

The network device can obtain real-time sensor information of the UE, and can estimate a current communication environment of a communications network in a relatively accurate manner based on the sensor information reported by the UE, so that a more suitable scheduling optimization policy is determined, and accuracy and effectiveness of network service optimization are improved. In addition, the network device performs optimization processing on a service of the UE or adjusts a related service based on the sensor information reported by the UE, so that power consumption of the UE can be effectively reduced, and user experience is improved. In addition, network signaling and resource usage can be optimized.

For example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

For example, the performing, by the network device, service optimization processing based on the sensor information of the UE includes: generating, by the network device, service optimization indication information based on the sensor information of the UE, where the service optimization indication information is used to indicate a service optimization policy that needs to be executed by the UE or the network device; and executing, by the network device based on the service optimization indication information, the service optimization policy that is indicated by the service optimization indication information.

Further, after generating the service optimization indication information based on the sensor information of the UE, the network device may further send a second message to the UE, where the second message includes the service optimization indication information.

In an optional implementation, the generating, by the network device, service optimization indication information based on the sensor information of the UE includes: generating, by the network device, channel quality variation information of the UE based on the sensor information of the UE; and further, the executing, by the network device based on the service optimization indication information, the service optimization policy that is indicated by the service optimization indication information includes: adjusting, by the network device, a service bit rate based on the channel quality variation information of the UE.

In another optional implementation, the generating, by the network device, service optimization indication information based on the sensor information of the UE includes: generating, by the network device, a recommended service bit rate based on the sensor information of the UE; and further, the executing, by the network device based on the service optimization indication information, the service optimization policy that is indicated by the service optimization indication information includes: adjusting, by the network device, a service bit rate based on the recommended service bit rate.

In still another optional implementation, the generating, by the network device, service optimization indication information based on the sensor information of the UE includes: generating, by the network device, fast scheduling indication information based on the sensor information of the UE; and further, the executing, by the network device based on the service optimization indication information, the service optimization policy that is indicated by the service optimization indication information includes: performing, by the network device, fast scheduling on service data based on the fast scheduling indication information.

The network device generates, based on the sensor information of the UE, indication information that is used to perform bit rate adjustment on a related service (for example, decreasing a bit rate, increasing a bit rate, or adjusting a bit rate to be a recommended bit rate), and instructs the UE to perform corresponding service optimization adjustment as well, so that efficiency of related service data transmission performed between the network device and the UE is effectively improved, and user experience is improved. The network device generates, based on the sensor information of the UE, indication information that is used to perform fast scheduling on a related service (for example, increasing a channel resource, reducing a channel resource, or adjusting a channel resource to be a designated channel resource), so that network signaling and resource usage can be optimized, and channel resource utilization is improved.

The following describes service optimization processing apparatuses provided in the embodiments of the present disclosure. The apparatus part is corresponding to the foregoing methods, and corresponding content and technical effects are the same as those in the foregoing methods. Details are not repeatedly described herein.

According to a third aspect, an embodiment of the present disclosure provides a service optimization processing apparatus. The apparatus may be applied to UE, and the apparatus includes:
an obtaining module, configured to obtain sensor information of the UE; and
a sending module, configured to send a first message to a network device, where the first message includes the sensor information of the UE, and the first message is used by the network device to perform optimization processing on a service of the UE based on the sensor information of the UE.

Optionally, the obtaining module may be configured to execute at least one of the following operations: obtaining sensor type information of the UE; obtaining sensor precision information of the UE; and obtaining sensor value information of the UE.

Further, optionally, the sensor value information of the UE may include at least one of a movement speed of the UE, a movement direction of the UE, and location information of the UE.

Optionally, the apparatus may further include a receiving module, configured to receive a second message from the network device, where the second message includes service optimization indication information that is generated by the network device based on the sensor information of the UE, and the service optimization indication information is used to indicate a service optimization policy that needs to be executed by the UE or the network device.

In an optional implementation, the service optimization indication information includes channel quality variation information of the UE, and the apparatus further includes: a service optimization module, configured to adjust a service bit rate based on the channel quality variation information of the UE.

In still another optional implementation, the service optimization indication information includes a service bit rate recommended by the network device, the apparatus includes a service optimization module, and the service optimization module may be configured to adjust a service bit rate based on the recommended service bit rate.

In still another optional implementation, the service optimization indication information includes fast scheduling indication information, where the fast scheduling indication information is used to indicate, to the UE, that fast scheduling is to be performed on service data by the network device.

According to a fourth aspect, an embodiment of the present disclosure provides a service optimization processing apparatus. The apparatus may be applied to a network device, and the apparatus includes:
a receiving module, configured to receive a first message from UE, where the first message includes sensor information of the UE; and
a service optimization module, configured to perform service optimization processing based on the sensor information of the UE.

For example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

Optionally, the service optimization module may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, optionally, the apparatus may further include a sending module, configured to send a second message to the UE, where the second message includes the service optimization indication information.

In an optional implementation, the service optimization module may be configured to: generate channel quality variation information of the UE based on the sensor information of the UE; and adjust a service bit rate based on the channel quality variation information of the UE.

In another optional implementation, the service optimization module may be configured to: generate a recommended service bit rate based on the sensor information of the UE; and adjust a service bit rate based on the recommended service bit rate.

In still another optional implementation, the service optimization module may be configured to: generate fast scheduling indication information based on the sensor information of the UE; and perform fast scheduling on service data based on the fast scheduling indication information.

According to a fifth aspect, an embodiment of the present disclosure provides a service optimization processing apparatus. The apparatus may be applied to UE, and the apparatus includes:
a processor, configured to obtain sensor information of the UE; and
a transmitter, configured to send a first message to a network device, where the first message includes the sensor information of the UE, and the first message is used by the network device to perform optimization processing on a service of the UE based on the sensor information of the UE.

Optionally, the processor may be configured to obtain at least one of the following information: sensor type information of the UE, sensor precision information of the UE, and sensor value information of the UE.

Further, optionally, the sensor value information of the UE may include at least one of a movement speed of the UE, a movement direction of the UE, and location information of the UE.

Optionally, the apparatus may further include a receiver, configured to receive a second message from the network device, where the second message includes service optimization indication information that is generated by the network device based on the sensor information of the UE, and the service optimization indication information is used to indicate a service optimization policy that needs to be executed by the UE or the network device.

In an optional implementation, the service optimization indication information includes channel quality variation information of the UE, and the processor may be further configured to adjust a service bit rate based on the channel quality variation information of the UE.

In another optional implementation, the service optimization indication information includes a service bit rate recommended by the network device, and the processor may be further configured to adjust a service bit rate based on the recommended service bit rate.

In still another optional implementation, the service optimization indication information includes fast scheduling indication information, where the fast scheduling indication information is used to indicate, to the UE, that fast scheduling is to be performed on service data by the network device.

According to a sixth aspect, an embodiment of the present disclosure provides a service optimization processing apparatus. The apparatus may be applied to a network device, and the apparatus includes:
a receiver, configured to receive a first message from UE, where the first message includes sensor information of the UE; and
a processor, configured to perform service optimization processing based on the sensor information of the UE.

For example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

Optionally, the processor may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, optionally, the apparatus may further include a transmitter, configured to send a second message to the UE, where the second message includes the service optimization indication information.

In an optional implementation, the processor may be configured to: generate channel quality variation information of the UE based on the sensor information of the UE; and adjust a service bit rate based on the channel quality variation information of the UE.

In another optional implementation, the processor may be configured to: generate a recommended service bit rate based on the sensor information of the UE; and adjust a service bit rate based on the recommended service bit rate.

In still another optional implementation, the processor may be configured to: generate fast scheduling indication information based on the sensor information of the UE; and perform fast scheduling on service data based on the fast scheduling indication information.

The following describes user equipment and a network device that are provided in the embodiments of the present disclosure and that may be configured to implement the foregoing service optimization processing method. The device part is corresponding to the foregoing method, and corresponding content has a same technical effect. Details are not repeatedly described herein.

According to a seventh aspect, an embodiment of the present disclosure provides user equipment, including a transmitter, a receiver, a memory, and a processor that is coupled to the memory, where the transmitter, the receiver, the memory, and the processor communicate with each other by using a bus system; the memory stores a software program; and by running the software program in the memory, the processor is configured to:
obtain sensor information of the UE; and
send a first message to a network device by using the transmitter, where the first message includes the sensor information of the UE, and the first message is used by the network device to perform service optimization processing based on the sensor information of the UE.

Optionally, the processor may be configured to execute at least one of the following operations: obtaining sensor type information of the UE; obtaining sensor precision information of the UE; and obtaining sensor value information of the UE.

Further, optionally, the sensor value information of the UE includes at least one of a movement speed of the UE, a movement direction of the UE, and location information of the UE.

Optionally, the processor may be further configured to: receive, by using the receiver, a second message from the network device, where the second message includes service optimization indication information that is generated by the network device based on the sensor information of the UE, and the service optimization indication information is used to indicate a service optimization policy that needs to be executed by the UE or the network device.

In an optional implementation, the service optimization indication information includes channel quality variation information of the UE, and the processor may be further configured to adjust a service bit rate based on the channel quality variation information of the UE.

In another optional implementation, the service optimization indication information includes a service bit rate recommended by the network device, and the processor may be further configured to adjust a service bit rate based on the recommended service bit rate.

In still another optional implementation, the service optimization indication information includes fast scheduling indication information, where the fast scheduling indication information is used to indicate, to the UE, that fast scheduling is to be performed on service data by the network device.

According to an eighth aspect, an embodiment of the present disclosure provides a network device, including a transmitter, a receiver, a memory, and a processor that is coupled to the memory, where the transmitter, the receiver, the memory, and the processor communicate with each other by using a bus system; the memory stores a software program; and by running the software program in the memory, the processor is configured to:
receive, by using the receiver, a first message from UE, where the first message includes sensor information of the UE; and
perform service optimization processing based on the sensor information of the UE.

For example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

Optionally, the processor may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, optionally, the processor may be further configured to send a second message to the UE by using the transmitter, where the second message includes the service optimization indication information.

In an optional implementation, the processor may be configured to: generate channel quality variation information of the UE based on the sensor information of the UE; and adjust a service bit rate based on the channel quality variation information of the UE.

In another optional implementation, the processor may be configured to: generate a recommended service bit rate based on the sensor information of the UE; and adjust a service bit rate based on the recommended service bit rate.

In still another optional implementation, the processor may be configured to: generate fast scheduling indication information based on the sensor information of the UE; and perform fast scheduling on service data based on the fast scheduling indication information.

In addition, the embodiments of the present disclosure further provide a plurality of service optimization processing systems, and the plurality of service optimization processing systems may be applied to a mobile communications network.

A service optimization processing system may include: UE with a service optimization processing apparatus provided in the third aspect or the fifth aspect and a network device with a service optimization processing apparatus provided in the fourth aspect or the sixth aspect.

Another service optimization processing system may include: the UE provided in the seventh aspect and the network device provided in the eighth aspect.

According to the service optimization processing method, the device, and the system that are provided in the embodiments of the present disclosure, the sensor information of the UE, for example, the sensor information such as the movement direction or speed, is reported to the network device, and the network device predicts a status of the UE based on the sensor information of the UE, and performs optimization processing on a service of the UE based on the status or adjusts a related service based on the sensor information of the UE. In this way, user experience can be improved, network signaling and resource usage can be optimized, and channel resource utilization can be improved. By using the obtained sensor information of the UE, a communication environment of a communications network can be estimated more effectively, so that a more suitable scheduling optimization policy is determined, and accuracy and effectiveness of network service optimization are improved.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and persons of ordinary skill in the art may derive other drawings from these accompanying drawings without creative efforts.
FIG. 1 is a flowchart of a service optimization processing method according to an embodiment of the present disclosure;
FIG. 2 is a flowchart of another service optimization processing method according to an embodiment of the present disclosure;
FIG. 3 is a schematic diagram of a service optimization processing apparatus that is applied to UE according to an embodiment of the present disclosure;
FIG. 4 is a schematic diagram of another service optimization processing apparatus that is applied to UE according to an embodiment of the present disclosure;
FIG. 5 is a schematic diagram of still another service optimization processing apparatus that is applied to UE according to an embodiment of the present disclosure;
FIG. 6 is a schematic diagram of yet another service optimization processing apparatus that is applied to UE according to an embodiment of the present disclosure;
FIG. 7 is a schematic diagram of a service optimization processing apparatus that is applied to a network device according to an embodiment of the present disclosure;
FIG. 8 is a schematic diagram of another service optimization processing apparatus that is applied to a network device according to an embodiment of the present disclosure;
FIG. 9 is a schematic diagram of still another service optimization processing apparatus that is applied to a network device according to an embodiment of the present disclosure;
FIG. 10 is a schematic diagram of yet another service optimization processing apparatus that is applied to a network device according to an embodiment of the present disclosure;
FIG. 11 is a schematic diagram of user equipment according to an embodiment of the present disclosure; and
FIG. 12 is a schematic diagram of a network device according to an embodiment of the present disclosure.

### DESCRIPTION OF EMBODIMENTS

The following clearly describes the technical solutions in the embodiments of the present disclosure with reference to the accompanying drawings in the embodiments of the present disclosure. Apparently, the described embodiments are merely some but not all of the embodiments of the present disclosure. All other embodiments obtained by persons of ordinary skill in the art based on the embodiments of the present disclosure without creative efforts shall fall within the protection scope of the present disclosure.

According to a service optimization processing method, a device, and a system in the embodiments of the present disclosure, sensor information of UE, for example, sensor information such as a movement direction or speed, may be reported to a network device, and the network device predicts a status of the UE based on the sensor information of the UE, and performs corresponding optimization on a service based on the status or adjusts a related service based on the sensor information of the UE. In this way, user experience is improved, network signaling and resource usage are optimized, and channel resource utilization is improved.

The technical solutions provided in the embodiments of the present disclosure are mainly applied to a mobile communications system, and an architecture of the system includes UE and a network device. The UE may be user equipment in a wireless communications system, and may be various types of terminals, sensors, machine type devices, unmanned aircraft systems, and the like. A suitable application/software (APP) may be loaded in the UE, to cooperate with the network device to implement corresponding service optimization. The network device may be an access network device, a core network device, or an access network device and a core network device. For example, the network device may be a network control node such as an evolved NB (eNB) or a core network node. The network device may also be any relay device that transfers service data. It can be understood that the relay device may be user equipment.

In the following embodiments of the present disclosure, interaction between UE and a RAN is used as an example for detailed description. The RAN may be a control node for a radio network resource, for example, may be a network control node, such as a NodeB (NB), an evolved NodeB (eNB), a radio network controller (RNC), a core network (CN) node, a mobility management entity (MME), or a policy and charging rules function (PCRF) node. A main function of the RAN is to control the user equipment to access a mobile communications network in a wireless manner. Obviously, the embodiments are used for description but not for limiting the present disclosure.

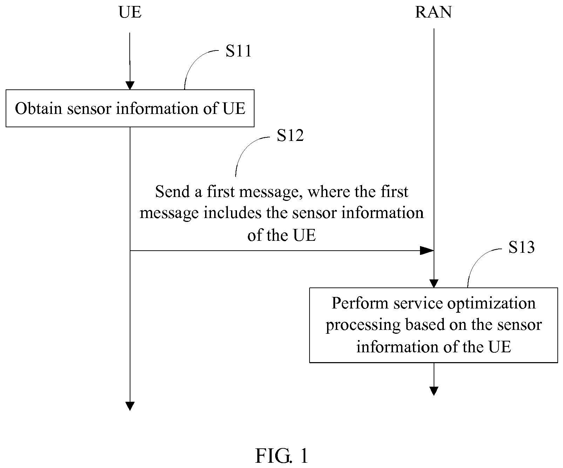

FIG. 1 is a flowchart of a service optimization processing method according to an embodiment of the present disclosure. As shown in FIG. 1, the method may include the following steps.

S11. UE obtains sensor information of the UE.

For example, the sensor information obtained by the UE may be sensor type information and/or sensor precision information of the UE and/or a sensor value of the UE. In other words, the UE may obtain at least one of the following information as the sensor information of the UE: sensor type information of the UE, sensor precision information of the UE, and sensor value information of the UE. Currently, there are a plurality of types of sensors in the UE, including an acceleration sensor, a gyro sensor, a distance sensor, an ambient light sensor, a magnetic sensor, a pressure sensor, and the like. The sensor information may be information provided by any of at least one of these sensors. Different types of UEs have different types of sensors and different precision.

It should be noted that the sensor information obtained by the UE may also be version information of the UE. For example, the sensor information obtained by the UE may be one or more of a chip type, a chip version, an operating system version, a version of an installed application, and the like. Based on the version information of the UE, the sensor type information and/or the sensor precision information of the UE may then be obtained.

The sensor value of the UE is a value obtained or measured by a sensor of the UE, or a value obtained by calculating information that is obtained by a plurality of sensors. For example, the sensor value of the UE may be one or more of the following information: a current movement speed of the UE, a current movement direction of the UE, current geographic location information of the UE, time information, and power level information (or standby duration) of the UE.

For example, the UE may accurately obtain the movement speed and the movement direction of the UE by using the acceleration sensor and the gyro sensor, obtain the current geographic location information of the UE by using a GPS sensor in the UE, and obtain acceleration information of the UE by using the acceleration sensor in the UE.

It should be noted that the sensor information of the UE is not limited to the current movement speed of the UE, the current movement direction of the UE, the current geographic location information of the UE, the time information, the power level information of the UE, and the like. Certainly, another sensor value obtained by using another sensor in the UE may also be used as the sensor information of the UE.

S12. The UE sends a first message to a RAN, where the first message includes the sensor information of the UE.

For example, in addition to the sensor information of the UE, the first message may further include current actual service experience data that is to be reported to a network device. The service experience data of the UE may be fed back based on a user actual experience indicator that is preconfigured in a terminal, for example a mean opinion score (MOS), a video mean opinion score (VMOS), and a stalling frequency and stalling duration of streaming media. The MOS is an important indicator for measuring voice quality of a communications system, and the VMOS is an important indicator for measuring video quality of a communications system. By analyzing the service experience data (including communication quality, satisfaction, and the like) of the UE and combining the geographic location information and time information of the UE, the network device may guide mobile network service optimization.

It can be understood that, in this embodiment, the UE may further report any other type of data that is valuable in guiding mobile network service optimization. This is not specifically limited in this embodiment.

In an optional implementation of this embodiment, the sensor information of the UE may also be obtained by the network device from a third party service platform.

S13. The RAN performs service optimization processing based on the sensor information of the UE.

The service optimization processing performed by the RAN based on the sensor information of the UE may include service scheduling optimization, big data collection of the UE, UE behavior determining, and the like.

For example, after receiving the first message from the UE, the network device may predict, based on the sensor information of the UE included in the first message, some behaviors of the UE that are within a period of time in the future, so as to obtain change in a channel state of the UE within the period of time in the future, and then determine a new network service scheduling optimization policy, so as to perform related optimization adjustment on a service of the UE.

For example, for example, when the sensor information of the UE obtained by the network device includes the movement speed of the UE, the movement direction of the UE, and the current location information of the UE, the network device may predict, based on the three pieces of information, a movement track of the UE that is within a period of time in the future, so as to obtain change in a channel state of the UE in the period of time in the future.

For example, after receiving the first message from the UE, the network device may further collect, based on the sensor information of the UE included in the first message, data information of the UE in a network coverage area, and obtain statistics information by collecting a large amount of UE data, so as to adjust a related service. For example, the network device obtains information such as a service map of the UE and a service viewing habit of the UE based on first message, and may optimize service establishment or scheduling for the UE in advance based on the information. The related service may be a service performed by the UE that reports the first message, or may be a service of another UE. This is not limited herein.

According to the service optimization processing method provided in this embodiment, the sensor information of the UE is reported to the network device, and the network device predicts a status of the UE based on the sensor information of the UE, and performs optimization processing on a service of the UE based on the status, or the network device adjusts, based on the sensor information of the UE, a service related to the network device. On the one hand, power consumption of the UE can be effectively reduced and user experience can be improved; on the other hand, network signaling and resource usage can be optimized and channel resource utilization can be improved. By using the obtained sensor information of the UE, a communication environment of a communications network can be estimated more effectively, so that a more suitable scheduling optimization policy is determined, and accuracy and effectiveness of network service optimization are improved.

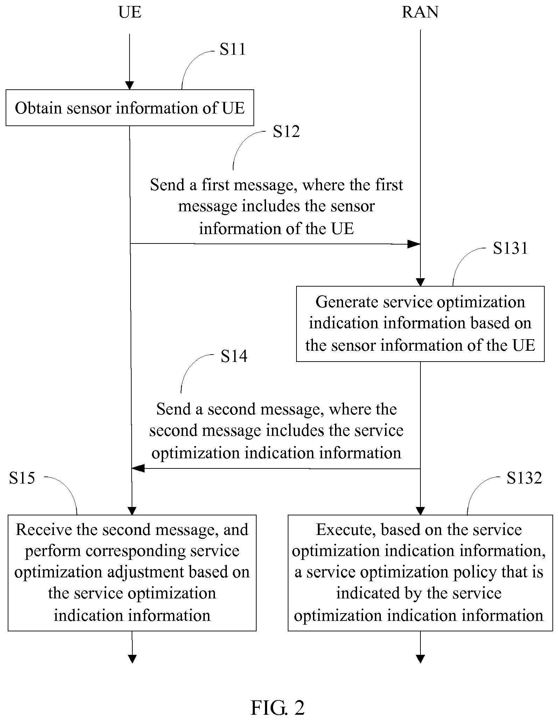

FIG. 2 is a flowchart of another service optimization processing method according to an embodiment of the present disclosure. Based on the embodiment shown in FIG. 1, in this embodiment, step S13 may include the following steps.

S131. The RAN generates service optimization indication information based on the sensor information of the UE.

It can be understood that the service optimization indication information is used to indicate a service optimization policy that needs to be executed by the UE or the network device.

For example, the RAN may estimate a communication environment of the UE based on the sensor information of the UE. In other words, the RAN may determine channel state information (CSI) of the UE, so as to generate the service optimization indication information based on the channel state information of the UE.

S132. The RAN executes, based on the service optimization indication information, a service optimization policy that is indicated by the service optimization indication information.

For example, the service optimization indication information may be channel quality variation information of the UE. The network device may perform service adjustment based on a channel quality variation status of the UE. For example, for a video service, if channel quality of the UE deteriorates within a period of time in the future, for example, a reference signal receiving power (RSRP) value or a received signal code power (RSCP) value is less than a threshold, the network device may decrease a video bit rate, so that a video is smoothly played; if channel quality of the UE becomes better within a period of time in the future, the network device may increase a video bit rate, so that a video becomes clearer.

For example, the service optimization indication information may also be a service bit rate recommended by the network device. The network device may directly perform service optimization adjustment based on the generated service bit rate. For example, for a video service, if the generated service optimization indication information is a bit rate recommended by the network device, the network device may adjust a bit rate based on the recommended bit rate, and send video service data of the bit rate to the UE, so as to implement adjustment optimization.

For example, the service optimization indication information may be further fast scheduling indication information. In this case, the network device performs fast scheduling on service data based on a channel quality variation. For example, for a video service, if the network device predicts, based on the sensor information of the UE, that channel quality of the UE will deteriorate, correspondingly, the network device generates fast scheduling indication information and allocates, according to indication of the fast scheduling indication information, more resources to accelerate video data transmission. In other words, the network device increases channel resources that are used for video data transmission. If the network device predicts, based on the sensor information of the UE, that channel quality of the UE will become better, correspondingly, the network device may also generate fast scheduling indication information and allocate, according to indication of the fast scheduling indication information, relatively few resources for video data transmission. In other words, the network device decreases channel resources that are used for video data transmission.

For example, the fast scheduling indication information may also be a channel resource that is allocated by the network device to the UE and that is used for related service data transmission, and next, the network device performs related service data transmission with the UE by using the designated channel resource.

In this embodiment, further, optionally, after step S131, the method may further include the following steps.

S14. The RAN sends a second message to the UE, where the second message includes the service optimization indication information.

S15. The UE receives the second message, and performs corresponding service optimization adjustment based on the service optimization indication information.

For example, the service optimization indication information may be channel quality variation information of the UE. After obtaining the indication information delivered by the network device, the UE may perform service adjustment based on a channel quality variation status of the UE within a period of time in the future. For example, for a video service, if channel quality of the UE deteriorates (for example, an RSRP value or an RSCP value is lower than a threshold) in a period of time in the future, the UE may decease a video bit rate, so that a video is smoothly played; if channel quality of the UE becomes better in a period of time in the future, the UE may increase a video bit rate, so that a video becomes clearer.

For example, the service optimization indication information may also be a service bit rate recommended by the network device. After receiving the indication information delivered by the network device, the UE may directly perform service optimization adjustment based on the service bit rate recommended by the network device. For example, for a video service, if the service optimization indication information is a bit rate recommended by the network device, the UE may request bit rate adjustment based on the recommended bit rate, and request an adjusted bit rate from the network device. The network device sends video service data of the bit rate to the UE, so as to implement adjustment optimization.

The network device generates, based on the sensor information of the UE, indication information that is used to adjust a related service bit rate (for example, decreasing a bit rate, increasing a bit rate, or adjusting a bit rate to be a recommended bit rate), and instructs the network device and the UE to perform corresponding service optimization adjustment, so that efficiency of related service data transmission performed between the network device and the UE is effectively improved, and user experience is improved.

For example, the service optimization indication information may be further fast scheduling indication information used to indicate to the UE that the network device performs fast scheduling because of a channel quality variation. After obtaining the indication information delivered by the network device, the UE learns that the network device will perform fast scheduling on service data. For example, for a video service, if the network device predicts that channel quality of the UE will deteriorate within a period of time in the future, the network device may send fast scheduling indication information to the UE, to indicate to the UE that the network device allocates more resources to accelerate video data transmission. In other words, the network device increases channel resources that are used for video data transmission. If the network device predicts that channel quality of the UE will become better within a period of time in the future, the network device may send fast scheduling indication information to the UE, to indicate to the UE that the network device allocates relatively few resources for video data transmission. In other words, the network device decreases channel resources that are used for video data transmission.

For example, the fast scheduling indication information may also be a channel resource that is allocated by the network device to the UE and that is used for related service data transmission. After obtaining the indication information delivered by the network device, the UE learns of that the network device is to perform related service data transmission by using the designated channel resource.

The network device generates, based on the sensor information of the UE, indication information that is used to perform fast scheduling on a related service (for example, increasing a channel resource, reducing a channel resource, or adjusting a channel resource to be a designated channel resource), and performs fast scheduling on a service of the UE, so that network signaling and resource usage can be optimized, and channel resource utilization is improved.

It can be understood that the service optimization indication information shown in the foregoing examples may also be indication information other than a bit rate adjustment indication and a channel resource adjustment indication, for example, may be a DRX period or duration in which the UE maintains an RRC connection state. This is not specifically limited in this embodiment.

In addition, in this embodiment, the service optimization indication information may be specified for a single service of the UE or may be specified for a plurality of services of the UE. This is not specifically limited in this embodiment.

In step S15, for example, after receiving the service optimization indication information, the UE transfers the service optimization indication information to a service application layer or a related APP by using a bottom layer of the UE, and the application layer or the APP performs related optimization adjustment based on content included in the service optimization indication information. For example, for a video service, if the service optimization indication information is a bit rate recommended by the network device, a video service APP on the UE may request bit rate adjustment based on the recommended bit rate, and request data of the bit rate from a server. The server sends video service data of the bit rate to the UE, so as to implement optimization adjustment.

According to the service optimization processing method provided in this embodiment, the sensor information of the UE is reported to the network device, the network device predicts a status of the UE based on the sensor information of the UE, determines a service scheduling optimization policy based on the status, instructs the UE to perform corresponding service optimization adjustment, and then performs related service data transmission with the UE based on the newly-determined service scheduling optimization policy, and the network device may further adjust a related service based on the sensor information of the UE. In this way, power consumption of the UE can be effectively reduced, user experience can be improved, and network signaling and resource usage can be optimized, thereby improving channel resource utilization. It can be understood that service data transmission performed between the network device device and the UE based on the new scheduling optimization policy includes not only downlink data transmission but also uplink data transmission. In this embodiment of the present disclosure, related service data transmission performed based on the optimized and adjusted policy is mainly specified for downlink data transmission, and certainly, may also be uplink data transmission.

In the foregoing embodiment of the present disclosure, the sensor information of the UE is obtained in real time. In this way, a current communication environment of the UE can be fed back more effectively, and the network device can estimate a current communication environment of a communications network based on the reported sensor information of the UE in a relatively accurate manner, so that a more suitable scheduling optimization policy is determined, and accuracy and effectiveness of network service optimization are improved.

Based on a same concept as the service optimization processing method provided in the embodiment described in FIG. 1 or FIG. 2, the embodiments of the present disclosure further provide a service optimization processing apparatus that is applied to UE and a service optimization processing apparatus that is applied to a network device.

The service optimization processing apparatus that is applied to the UE may be integrated into the UE, the service optimization processing apparatus that is applied to the network device may be integrated into a network device (for example, a network control node such as an NB, an eNB, an RNC, a CN, an MME, or a PCRF.), and both the two apparatuses may be implemented by using software or hardware, or a combination of software and hardware. For example, the foregoing two apparatuses may be APPs that are implemented by using software programs. The two apparatuses may be configured to implement the service optimization processing methods provided in the foregoing method embodiments. It can be understood that the apparatus part is corresponding to the foregoing methods, and corresponding content and technical effects are the same as those in the foregoing methods. Details are not repeatedly described herein.

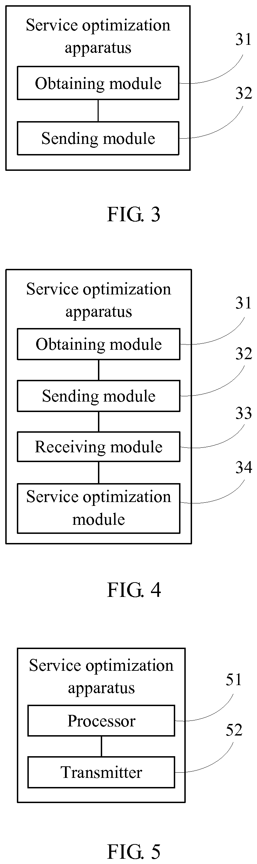

FIG. 3 is a schematic diagram of a service optimization processing apparatus that is applied to UE according to an embodiment of the present disclosure. As shown in FIG. 3, the apparatus includes an obtaining module 31 and a sending module 32.

The obtaining module 31 is configured to obtain sensor information of the UE; and the sending module 32 is configured to send a first message to a network device, where the first message includes the sensor information of the UE, and the first message is used by the network device to perform optimization processing on a service of the UE based on the sensor information of the UE.

For example, the obtaining module 31 may be configured to obtain at least one of the following information: sensor type information of the UE, sensor precision information of the UE, and sensor value information of the UE.

Further, in this embodiment, the sensor value information of the UE may include at least one of a movement speed of the UE, a movement direction of the UE, and location information of the UE.

The service optimization processing apparatus that is applied to the UE and that is provided in this embodiment may be configured to implement the technical solutions of the method embodiment corresponding to FIG. 1, and an implementation principle and technical effects thereof are similar to those in the method embodiment corresponding to FIG. 1. Details are not repeatedly described herein.

FIG. 4 is a schematic diagram of another service optimization processing apparatus that is applied to UE according to an embodiment of the present disclosure. As shown in FIG. 4, based on the embodiment shown in FIG. 3, the apparatus may further include a receiving module 33, configured to receive a second message from the network device, where the second message includes service optimization indication information that is generated by the network device based on the sensor information of the UE, and the service optimization indication information is used to indicate a service optimization policy that needs to be executed by the UE or the network device.

Further, the foregoing apparatus further includes a service optimization module 34, configured to execute, based on the service optimization indication information, the optimization policy indicated by the service optimization indication information.

In another optional implementation, the service optimization indication information includes channel quality variation information of the UE, and the service optimization module 34 may be configured to adjust a service bit rate based on the channel quality variation information of the UE.

In still another optional implementation, the service optimization indication information includes a service bit rate recommended by the network device, and the service optimization module 34 may be configured to adjust a service bit rate based on the recommended service bit rate.

In yet another optional implementation, the service optimization indication information includes fast scheduling indication information, where the fast scheduling indication information is used to indicate, to the UE, that fast scheduling is to be performed on service data by the network device.

The service optimization processing apparatus that is applied to the UE and that is provided in this embodiment may be configured to implement the technical solutions of the method embodiment corresponding to FIG. 1 or FIG. 2, and an implementation principle and technical effects thereof are similar to those in the method embodiment corresponding to FIG. 1 or FIG. 2. Details are not repeatedly described herein.

FIG. 5 is a schematic diagram of still another service optimization processing apparatus that is applied to UE according to an embodiment of the present disclosure. As shown in FIG. 5, the apparatus includes a processor 51 and a transmitter 52.

The processor 51 is configured to obtain sensor information of the UE; and the transmitter 52 is configured to send a first message to a network device, where the first message includes the sensor information of the UE, and the first message is used by the network device to perform optimization processing on a service of the UE based on the sensor information of the UE.

For example, the processor 51 may be configured to obtain at least one of the following information: sensor type information of the UE, sensor precision information of the UE, and sensor value information of the UE.

Further, in this embodiment, the sensor value information of the UE may include at least one of a movement speed of the UE, a movement direction of the UE, and location information of the UE.

The service optimization processing apparatus that is applied to the UE and that is provided in this embodiment may be configured to implement the technical solutions of the method embodiment corresponding to FIG. 1, and an implementation principle and technical effects thereof are similar to those in the method embodiment corresponding to FIG. 1. Details are not repeatedly described herein.

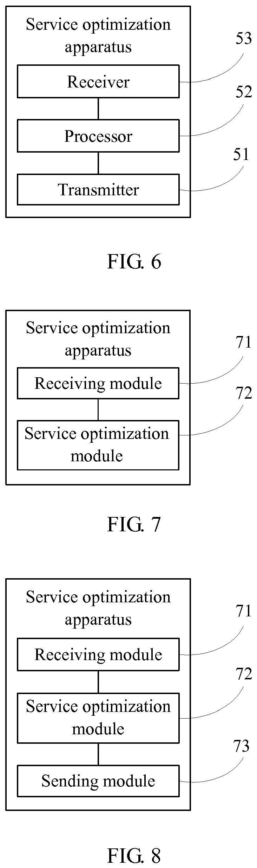

FIG. 6 is a schematic diagram of yet another service optimization processing apparatus that is applied to UE according to an embodiment of the present disclosure. As shown in FIG. 6, based on the embodiment shown in FIG. 5, the apparatus may further include a receiver 53, configured to receive a second message from the network device, where the second message includes service optimization indication information that is generated by the network device based on the sensor information of the UE, and the service optimization indication information is used to indicate a service optimization policy that needs to be executed by the UE or the network device.

Further, the processor 51 may be further configured to execute, based on the service optimization indication information, the optimization policy indicated by the service optimization indication information.

In another optional implementation, the service optimization indication information includes channel quality variation information of the UE, and the processor 51 may be configured to adjust a service bit rate based on the channel quality variation information of the UE.

In still another optional implementation, the service optimization indication information includes a service bit rate recommended by the network device, and the processor 51 may be configured to adjust a service bit rate based on the recommended service bit rate.

In yet another optional implementation, the service optimization indication information includes fast scheduling indication information, where the fast scheduling indication information is used to indicate, to the UE, that fast scheduling is to be performed on service data by the network device.

The service optimization processing apparatus that is applied to the UE and that is provided in this embodiment may be configured to implement the technical solutions of the method embodiment corresponding to FIG. 1 or FIG. 2, and an implementation principle and technical effects thereof are similar to those in the method embodiment corresponding to FIG. 1 or FIG. 2. Details are not repeatedly described herein.

FIG. 7 is a schematic diagram of a service optimization processing apparatus that is applied to a network device according to an embodiment of the present disclosure. As shown in FIG. 7, the apparatus includes a receiving module 71 and a service optimization module 72.

The receiving module 71 is configured to receive a first message from UE, where the first message includes sensor information of the UE; and the service optimization module 72 is configured to perform service optimization processing based on the sensor information of the UE.

In this embodiment, for example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

The service optimization processing apparatus that is applied to the network device and that is provided in this embodiment may be configured to implement the technical solutions of the method embodiment corresponding to FIG. 1, and an implementation principle and technical effects thereof are similar to those in the method embodiment corresponding to FIG. 1. Details are not repeatedly described herein.

In an optional implementation, the service optimization module 72 may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, an embodiment of the present disclosure further provides another service optimization processing apparatus that is applied to a network device. FIG. 8 is a schematic diagram of the another service optimization processing apparatus that is applied to the network device according to this embodiment of the present disclosure. As shown in FIG. 8, based on the embodiment shown in FIG. 7, the apparatus may further include a sending module 73, configured to send a second message to the UE, where the second message includes the service optimization indication information.

In an optional implementation of the embodiment shown in FIG. 7 or FIG. 8, the service optimization module 72 may be configured to: generate channel quality variation information of the UE based on the sensor information of the UE; and adjust a service bit rate based on the channel quality variation information of the UE.

In another optional implementation, the service optimization module 72 may be configured to: generate a recommended service bit rate based on the sensor information of the UE; and adjust a service bit rate based on the recommended service bit rate.

In still another optional implementation, the service optimization module 72 may be configured to: generate fast scheduling indication information based on the sensor information of the UE; and perform fast scheduling on service data based on the fast scheduling indication information.

The service optimization processing apparatus that is applied to the network device and that is provided in this embodiment may be configured to implement the technical solutions of the method embodiment corresponding to FIG. 1 or FIG. 2, and an implementation principle and technical effects thereof are similar to those in the method embodiment corresponding to FIG. 1 or FIG. 2. Details are not repeatedly described herein.

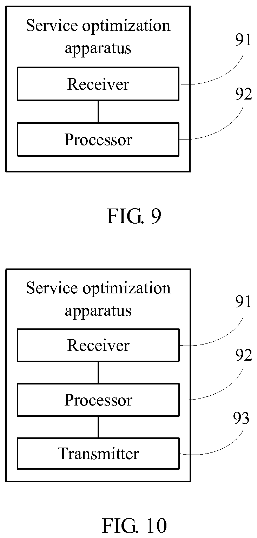

FIG. 9 is a schematic diagram of still another service optimization processing apparatus that is applied to a network device according to an embodiment of the present disclosure. As shown in FIG. 9, the apparatus includes a receiver 91 and a processor 92.

The receiver 91 is configured to receive a first message from UE, where the first message includes sensor information of the UE; and the processor 92 is configured to perform service optimization processing based on the sensor information of the UE.

In this embodiment, for example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

The service optimization processing apparatus that is applied to the network device and that is provided in this embodiment may be configured to implement the technical solutions of the method embodiment corresponding to FIG. 1, and an implementation principle and technical effects thereof are similar to those in the method embodiment corresponding to FIG. 1. Details are not repeatedly described herein.

In an optional implementation, the processor 92 may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, an embodiment of the present disclosure further provides yet another service optimization processing apparatus that is applied to a network device. FIG. 10 is a schematic diagram of the yet another service optimization processing apparatus that is applied to the network device according to this embodiment of the present disclosure. As shown in FIG. 10, based on the embodiment shown in FIG. 9, the apparatus may further include a transmitter 93, configured to send a second message to the UE, where the second message includes the service optimization indication information.

In an optional implementation of the embodiment shown in FIG. 9 or FIG. 10, the processor 92 may be configured to: generate channel quality variation information of the UE based on the sensor information of the UE; and adjust a service bit rate based on the channel quality variation information of the UE.

In another optional implementation, the processor 92 may be configured to: generate a recommended service bit rate based on the sensor information of the UE; and adjust a service bit rate based on the recommended service bit rate.

In still another optional implementation, the processor 92 may be configured to: generate fast scheduling indication information based on the sensor information of the UE; and perform fast scheduling on service data based on the fast scheduling indication information.

The service optimization processing apparatus that is applied to the network device and that is provided in this embodiment may be configured to implement the technical solutions of the method embodiment corresponding to FIG. 1 or FIG. 2, and an implementation principle and technical effects thereof are similar to those in the method embodiment corresponding to FIG. 1 or FIG. 2. Details are not repeatedly described herein.

Based on a same concept as the service optimization processing methods provided in the foregoing method embodiments, the embodiments of the present disclosure further provide user equipment and a network device.

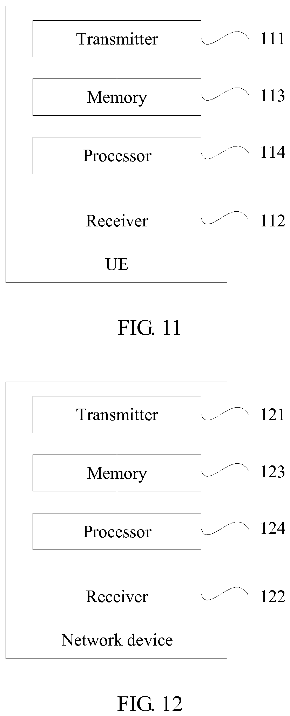

FIG. 11 is a schematic diagram of user equipment according to an embodiment of the present disclosure. As shown in FIG. 11, the user equipment provided in this embodiment includes a transmitter 111, a receiver 112, a memory 113, and a processor 114. The processor 114 is coupled to the memory 113, and the transmitter 111, the receiver 112, the memory 113, and the processor 114 may communicate with each other by using a bus system.

For example, the memory 113 stores a software program, and by running the software program in the memory 113, the processor 114 may be configured to: obtain sensor information of the UE; and send a first message to a network device by using the transmitter 111, where the first message includes the sensor information of the UE, and the first message is used by the network device to perform service optimization processing based on the sensor information of the UE.

In actual application, optionally, the processor 114 may be configured to obtain at least one of the following information: sensor type information of the UE, sensor precision information of the UE, and sensor value information of the UE.

Further, in this embodiment, the sensor value information of the UE may include at least one of a movement speed of the UE, a movement direction of the UE, and location information of the UE.

In actual application, optionally, the processor 114 may be further configured to: receive, by using the receiver 112, a second message from the network device, where the second message includes service optimization indication information that is generated by the network device based on the sensor information of the UE, and the service optimization indication information is used to indicate a service optimization policy that needs to be executed by the UE or the network device.

In an optional implementation, the service optimization indication information includes channel quality variation information of the UE, and the processor 114 may be further configured to adjust a service bit rate based on the channel quality variation information of the UE.

In another optional implementation, the service optimization indication information includes a service bit rate recommended by the network device, and the processor 114 may be further configured to adjust a service bit rate based on the recommended service bit rate.

In yet another optional implementation, the service optimization indication information includes fast scheduling indication information, where the fast scheduling indication information is used to indicate, to the UE, that fast scheduling is to be performed on service data by the network device.

The user equipment provided in this embodiment may be configured to implement the technical solutions provided in the foregoing method embodiments and is corresponding to the foregoing method embodiments. Corresponding content and technical effects are the same as those in the foregoing method embodiments. Details are not repeatedly described herein.

FIG. 12 is a schematic diagram of a network device according to an embodiment of the present disclosure. As shown in FIG. 12, the network device provided in this embodiment includes a transmitter 121, a receiver 122, a memory 123, and a processor 124. The processor 124 is coupled to the memory 123, and the transmitter 121, the receiver 122, the memory 123, and the processor 124 may communicate with each other by using a bus system.

For example, the memory 123 stores a software program; and by running the software program in the memory 123, the processor 124 may be configured to: receive, by using the receiver 122, a first message from UE, where the first message includes sensor information of the UE; and perform service optimization processing based on the sensor information of the UE.

In this embodiment, for example, the sensor information of the UE may include at least one of the following information: sensor type information of the UE, sensor precision information of the UE, and sensor value information of the UE.

Further, the sensor value information of the UE may include at least one of a movement speed of the UE, a movement direction of the UE, and location information of the UE.

In actual application, optionally, the processor 124 may be configured to: generate service optimization indication information based on the sensor information of the UE, where the service optimization indication information is used to indicate a service optimization policy that needs to be executed by the UE or the network device; and execute, based on the service optimization indication information, the service optimization policy that is indicated by the service optimization indication information.

Further, the processor 124 may be further configured to send a second message to the UE by using the transmitter 121, where the second message includes the service optimization indication information.

In actual application, in an optional implementation, the processor 124 may generate channel quality variation information of the UE based on the sensor information of the UE, and then adjust a service bit rate based on the channel quality variation information of the UE.

In actual application, in another optional implementation, the processor 124 may further generate a recommended service bit rate based on the sensor information of the UE, and then adjust a service bit rate based on the recommended service bit rate.

In actual application, in still another optional implementation, the processor 124 may further generate fast scheduling indication information based on the sensor information of the UE, and then perform fast scheduling on service data based on the fast scheduling indication information.

The network device provided in this embodiment may be configured to implement the technical solutions provided in the foregoing method embodiments and is corresponding to the foregoing method embodiments. Corresponding content and technical effects are the same as those in the foregoing method embodiments. Details are not repeatedly described herein.

In addition, the embodiments of the present disclosure further provide a plurality of service optimization processing systems, and the plurality of service optimization processing systems may be applied to a mobile communications network.

A service optimization processing system may include: UE with any one of the service optimization apparatuses provided in the embodiments shown in FIG. 3 to FIG. 6 and a network device with any one of the service optimization apparatuses provided in the embodiments shown in FIG. 7 to FIG. 10.

Another service optimization processing system may include: the UE provided in the embodiment shown in FIG. 11 and the network device provided in the embodiment shown in FIG. 12.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present disclosure.

## Claims

1. A user equipment, UE, comprising:
• a processor (51) configured to obtain sensor information of the UE;
• a transmitter (52) configured to send a first message to a network device, wherein the first message comprises the sensor information of the UE and current service experience data indicating a current communication quality, wherein the current service experience data are based on a preconfigured user experience indicator preconfigured in the UE, wherein the user experience indicator is one of:
∘ a mean opinion score, MOS, of streaming media,
∘ a stalling frequency of the streaming media, or
∘ a stalling duration of the streaming media,
wherein the first message is used by the network device to perform service optimization processing based on the sensor information and the current service experience data of the UE;
• a receiver (53) configured to receive a second message from the network device, wherein the second message comprises service optimization indication information that is generated by the network device based on the sensor information and the current service experience data of the UE, and the service optimization indication information is used to indicate a service optimization policy that needs to be executed by the UE;
• wherein the processor (51) is further configured to execute, based on the service optimization indication information, the service optimization policy.

2. The UE according to claim 1, wherein the processor (51) is configured to obtain at least one of the following information:
sensor type information of the UE;
sensor precision information of the UE; and
sensor value information of the UE.

3. The UE according to claim 2, wherein the sensor value information of the UE comprises at least one of a movement speed of the UE, a movement direction of the UE, and location information of the UE.

4. The UE according to any one of claims 1 - 3, wherein the service optimization indication information comprises channel quality variation information of the UE, and the processor (51) is further configured to adjust a service bit rate based on the channel quality variation information of the UE.

5. The UE according to any one of claims 1 - 3, wherein the service optimization indication information comprises a recommended service bit rate, and the processor (51) is further configured to adjust a service bit rate based on the recommended service bit rate.

6. The UE according to any one of claims 1 - 3, wherein the service optimization indication information comprises fast scheduling indication information, wherein the fast scheduling indication information is used to indicate, to the UE, that fast scheduling is to be performed on service data by the network device.

7. A network device comprising:
• a receiver (91) configured to receive a first message from a user equipment, UE, wherein the first message comprises sensor information of the UE and current service experience data indicating a current communication quality of the UE, wherein the current service experience data are based on a user experience indicator of the UE, wherein the user experience indicator is one of:
∘ a mean opinion score, MOS, of streaming media,
∘ a stalling frequency of the streaming media, or
∘ a stalling duration of the streaming media;
• a processor (92) is configured to:
∘ generate service optimization indication information based on the sensor information of the UE and based on the current service experience data of the UE; and
∘ execute, based on the service optimization indication information, a service optimization policy that is indicated by the service optimization indication information;
• a transmitter (93) configured to send a second message to the UE, wherein the second message comprises the service optimization indication information.

8. The network device according to claim 7, wherein the sensor information of the UE comprises at least one of the following information:
sensor type information of the UE;
sensor precision information of the UE; and
sensor value information of the UE.

9. The network device according to claim 8, wherein the sensor value information of the UE comprises at least one of a movement speed of the UE, a movement direction of the UE, and location information of the UE.

10. The network device according to claim 7, wherein the processor (92) is configured to:
generate channel quality variation information of the UE based on the sensor information of the UE; and
adjust a service bit rate based on the channel quality variation information of the UE.

11. The network device according to claim 7, wherein the processor (92) is configured to:
generate a recommended service bit rate based on the sensor information of the UE;
and adjust a service bit rate based on the recommended service bit rate.

12. The network device according to claim 7, wherein the processor (92) is configured to:
generate fast scheduling indication information based on the sensor information of the UE; and
perform fast scheduling on service data based on the fast scheduling indication information.

## Patentansprüche

1. Benutzerausrüstung, UE, umfassend:
• einen Prozessor (51), der konfiguriert ist, um Sensorinformationen der UE zu erhalten;
• einen Sender (52), der konfiguriert ist, um eine erste Nachricht an eine Netzwerkvorrichtung zu senden, wobei die erste Nachricht die Sensorinformationen der UE und aktuelle Diensterfahrungsdaten umfasst, die eine aktuelle Kommunikationsqualität anzeigen, wobei die aktuellen Diensterfahrungsdaten auf einem vorkonfigurierten, in der UE vorkonfigurierten Benutzererfahrungsindikator basieren, wobei der Benutzererfahrungsindikator einer der folgenden ist:
∘ eine mittlere Meinungsbewertung, MOS, von Streaming-Medien,
∘ eine Verzögerungsfrequenz der Streaming-Medien, oder
∘ eine Verzögerungszeit der Streaming-Medien,
wobei die erste Nachricht von der Netzwerkvorrichtung verwendet wird, um eine Dienstoptimierungsverarbeitung basierend auf den Sensorinformationen und den aktuellen Diensterfahrungsdaten der UE durchzuführen;
• einen Empfänger (53), der konfiguriert ist, um eine zweite Nachricht von der Netzwerkvorrichtung zu empfangen, wobei die zweite Nachricht Dienstoptimierungsanzeigeinformationen umfasst, die von der Netzwerkvorrichtung basierend auf den Sensorinformationen und den aktuellen Diensterfahrungsdaten der UE erzeugt werden, und die Dienstoptimierungsanzeigeinformationen verwendet werden, um eine Dienstoptimierungsrichtlinie anzuzeigen, die von der UE ausgeführt werden muss;
• wobei der Prozessor (51) ferner konfiguriert ist, um basierend auf den Dienstoptimierungsanzeigeinformationen die Dienstoptimierungsrichtlinie auszuführen.

2. UE nach Anspruch 1, wobei der Prozessor (51) konfiguriert ist, um mindestens eine der folgenden Informationen zu erhalten:
Sensortyp-Informationen der UE;
Sensorpräzisionsinformationen der UE; und
Sensorwertinformationen der UE.

3. UE nach Anspruch 2, wobei die Sensorwertinformation der UE eine Bewegungsgeschwindigkeit der UE und/oder eine Bewegungsrichtung der UE und/oder eine Ortsinformation der UE umfasst.

4. UE nach einem der Ansprüche 1 - 3, wobei die Dienstoptimierungsanzeigeinformationen Kanalqualitätsvariationsinformationen der UE umfassen, und der Prozessor (51) ferner konfiguriert ist, um eine Dienstbitrate basierend auf den Kanalqualitätsvariationsinformationen der UE anzupassen.

5. UE nach einem der Ansprüche 1 - 3, wobei die Dienstoptimierungsanzeigeinformationen eine empfohlene Dienstbitrate umfassen, und der Prozessor (51) ferner konfiguriert ist, um eine Dienstbitrate basierend auf der empfohlenen Dienstbitrate einzustellen.

6. UE nach einem der Ansprüche 1 - 3, wobei die Dienstoptimierungsanzeigeinformationen Schnellplanungsanzeigeinformationen umfassen, wobei die Schnellplanungsanzeigeinformationen verwendet werden, um der UE anzuzeigen, dass eine Schnellplanung der Dienstdaten durch die Netzwerkvorrichtung durchzuführen ist.

7. Netzwerkvorrichtung, umfassend:
• einen Empfänger (91), der konfiguriert ist, um eine erste Nachricht von einer Benutzerausrüstung, UE, zu empfangen, wobei die erste Nachricht Sensorinformationen der UE und aktuelle Diensterfahrungsdaten umfasst, die eine aktuelle Kommunikationsqualität der UE anzeigen, wobei die aktuellen Diensterfahrungsdaten auf einem Benutzererfahrungsindikator der UE basieren, wobei der Benutzererfahrungsindikator einer der folgenden ist:
∘ eine mittlere Meinungsbewertung, MOS, von Streaming-Medien,
∘ eine Verzögerungsfrequenz der Streaming-Medien, oder
∘ eine Verzögerungszeit der Streaming-Medien;
• ein Prozessor (92), der konfiguriert ist zum:
∘ Erzeugen von Dienstoptimierungsanzeigeinformationen basierend auf den Sensorinformationen der UE und basierend auf den aktuellen Diensterfahrungsdaten der UE; und
∘ Ausführen einer Serviceoptimierungsrichtlinie, die durch die Dienstoptimierungsanzeigeinformationen angezeigt wird, basierend auf den Dienstoptimierungsanzeigeinformationen;
• einen Sender (93), der konfiguriert ist, um eine zweite Nachricht an die UE zu senden, wobei die zweite Nachricht die Dienstoptimierungsanzeigeinformationen umfasst.

8. Netzwerkvorrichtung nach Anspruch 7, wobei die Sensorinformationen der UE mindestens eine der folgenden Informationen umfassen:
Sensortyp-Informationen der UE;
Sensorpräzisionsinformationen der UE; und
Sensorwertinformationen der UE.

9. Netzwerkvorrichtung nach Anspruch 8, wobei die Sensorwertinformationen der UE eine Bewegungsgeschwindigkeit der UE und/oder eine Bewegungsrichtung der UE und/oder eine Ortsinformation der UE umfasst.

10. Netzwerkvorrichtung nach Anspruch 7, wobei der Prozessor (92) konfiguriert ist zum:
Erzeugen von Kanalqualitätsvariationsinformationen der UE basierend auf den Sensorinformationen der UE; und
Anpassen einer Dienstbitrate basierend auf den Kanalqualitätsvariationsinformationen der UE.

11. Netzwerkvorrichtung nach Anspruch 7, wobei der Prozessor (92) konfiguriert ist zum:
Erzeugen einer empfohlenen Dienstbitrate basierend auf den Sensorinformationen der UE; und Anpassen einer Dienstbitrate basierend auf der empfohlenen Dienstbitrate.

12. Netzwerkvorrichtung nach Anspruch 7, wobei der Prozessor (92) konfiguriert ist zum:
Erzeugen von Schnellplanungsanzeigeinformationen basierend auf den Sensorinformationen der UE; und
Durchführen einer Schnellplanung von Servicedaten basierend auf den Schnellplanungsanzeigeinformationen.

## Revendications

1. Équipement utilisateur, UE, comprenant :
• un processeur (51) configuré pour obtenir des informations de capteur de l'UE ;
• un transmetteur (52) configuré pour envoyer un premier message à un dispositif de réseau,
dans lequel le premier message comprend les informations de capteur de l'UE et des données d'expérience de service actuel indiquant une qualité de communication actuelle, dans lequel les données d'expérience de service actuel sont basées sur un indicateur d'expérience utilisateur préconfiguré, préconfiguré dans l'UE, dans lequel l'indicateur d'expérience utilisateur est l'une parmi :
∘ une note d'opinion moyenne, MOS, de diffusion multimédia en continu,
∘ une fréquence d'arrêt de la diffusion multimédia en continu, et
∘ une durée d'arrêt de la diffusion multimédia en continu,
dans lequel le premier message est utilisé par le dispositif de réseau pour réaliser un traitement d'optimisation de service sur la base des informations de capteur et des données d'expérience de service actuel de l'UE ;
• un récepteur (53) configuré pour recevoir un second message à partir du dispositif de réseau, dans lequel le second message comprend des informations d'indication d'optimisation de service qui sont générées par le dispositif de réseau sur la base des informations de capteur et des données d'expérience de service actuel de l'UE, et les informations d'indication d'optimisation de service sont utilisées pour indiquer une politique d'optimisation de service qui doit être exécutée par l'UE ;
• dans lequel le processeur (51) est en outre configuré pour exécuter, sur la base des informations d'indication d'optimisation de service, la politique d'optimisation de service.

2. UE selon la revendication 1, dans lequel le processeur (51) est configuré pour obtenir au moins une des informations suivantes :
des informations de type de capteur de l'UE ;
des informations de précision de capteur de l'UE ; et
des informations de valeur de capteur de l'UE.

3. UE selon la revendication 2, dans lequel les informations de valeur de capteur de l'UE comprennent au moins un élément parmi : une vitesse de mouvement de l'UE, une direction de mouvement de l'UE, et des informations de localisation de l'UE.

4. UE selon l'une quelconque des revendications 1 à 3, dans lequel les informations d'indication d'optimisation de service comprennent des informations de variation de qualité de canal de l'UE, et le processeur (51) est en outre configuré pour ajuster un débit binaire de service sur la base des informations de variation de qualité de canal de l'UE.

5. UE selon l'une quelconque des revendications 1 à 3, dans lequel les informations d'indication d'optimisation de service comprennent un débit binaire de service recommandé, et le processeur (51) est en outre configuré pour ajuster un débit binaire de service sur la base du débit binaire de service recommandé.

6. UE selon l'une quelconque des revendications 1 à 3, dans lequel les informations d'indication d'optimisation de service comprennent des informations d'indication d'ordonnancement rapide, dans lequel les informations d'indication d'ordonnancement rapide sont utilisées pour indiquer à l'UE qu'un ordonnancement rapide doit être réalisé sur des données de service par le dispositif de réseau.

7. Dispositif de réseau, comprenant :
• un récepteur (91) configuré pour recevoir un premier message en provenance d'un équipement utilisateur, UE, dans lequel le premier message comprend des informations de capteur de l'UE et des données d'expérience de service actuel indiquant une qualité de communication actuelle de l'UE, dans lequel les données d'expérience de service actuel sont basées sur un indicateur d'expérience utilisateur de l'UE, dans lequel l'indicateur d'expérience utilisateur est l'une parmi :
∘ une note d'opinion moyenne, MOS, de diffusion multimédia en continu,
∘ une fréquence d'arrêt de la diffusion multimédia en continu, et
∘ une durée d'arrêt de la diffusion multimédia en continu ;
• un processeur (92) configuré pour :
∘ générer des informations d'indication d'optimisation de service sur la base des informations de capteur de l'UE et sur la base des données d'expérience de service actuel de l'UE ; et
∘ exécuter, sur la base des informations d'indication d'optimisation de service, une politique d'optimisation de service qui est indiquée par les informations d'indication d'optimisation de service ;
• un transmetteur (93) configuré pour envoyer un second message à l'UE, dans lequel le second message comprend les informations d'indication d'optimisation de service.

8. Dispositif de réseau selon la revendication 7, dans lequel les informations de capteur de l'UE comprennent au moins une des informations suivantes :
des informations de type de capteur de l'UE ;
des informations de précision de capteur de l'UE ; et
des informations de valeur de capteur de l'UE.

9. Dispositif de réseau selon la revendication 8, dans lequel les informations de valeur de capteur de l'UE comprennent au moins un élément parmi : une vitesse de mouvement de l'UE, une direction de mouvement de l'UE, et des informations de localisation de l'UE.

10. Dispositif de réseau selon la revendication 7, dans lequel le processeur (92) est configuré pour :
générer des informations de variation de qualité de canal de l'UE sur la base des informations de capteur de l'UE ; et
ajuster un débit binaire de service sur la base des informations de variation de qualité de canal de l'UE.

11. Dispositif de réseau selon la revendication 7, dans lequel le processeur (92) est configuré pour :
générer un débit binaire de service recommandé sur la base des informations de capteur de l'UE ; et
ajuster un débit binaire de service sur la base du débit binaire de service recommandé.

12. Dispositif de réseau selon la revendication 7, dans lequel le processeur (92) est configuré pour :
générer des informations d'indication d'ordonnancement rapide sur la base des informations de capteur de l'UE ; et
réaliser un ordonnancement rapide sur des données de service sur la base des informations d'indication d'ordonnancement rapide.
